# FASCICULE DE BREVET EUROPEEN

(11) **EP 3 714 306 B1**
(45) Date de publication et mention de la délivrance du brevet: **06.10.2021**
(21) Numéro de dépôt: 18819194.4
(22) Date de dépôt: 16.11.2018
(51) Int. Cl.: G02B 17/04, G02B 23/02, G01C 3/02, G01S 17/08

(54) **PROTECTION D'UN TELEMETRE LASER MONOSTATIQUE OU QUASI-MONOSTATIQUE**
SCHUTZ EINES MONOSTATISCHEN ODER QUASI-MONOSTATISCHEN LASERENTFERNUNGSMESSERS
PROTECTION OF A MONOSTATIC OR QUASI-MONOSTATIC LASER RANGEFINDER

(30) Priorité: 24.11.2017 FR 1701233
(43) Date de publication de la demande: 30.09.2020
(73) Titulaire: Safran Electronics & Defense, 75015 Paris (FR)
(72) Inventeur: ROBERT, Patrick, 75015 Paris (FR); MARIE, Vincent, 92100 Boulogne-Billancourt (FR)
(74) Mandataire: Plasseraud IP
(86) Numéro de dépôt international: PCT/FR2018/052864
(87) Numéro de publication internationale: WO 2019/102112

(56) Documents cités:
- EP-A1- 0 703 481
- US-A- 3 424 516
- US-B1- 7 345 743
- Anonymous: "LTSD-4 Laser Rangefinder/Designator", , 16 juin 2017 (2017-06-16), XP055496899, Extrait de l'Internet: URL:https://www.polyus.info/en/products-an d-services/designators-and-rangefinders/71 6443/ [extrait le 2018-08-01]

## Description

La présente invention concerne un procédé de protection d'un télémètre laser monostatique ou quasi-monostatique, en ajoutant au télémètre un module optique devant sa sortie optique. Elle concerne aussi l'ensemble télémétrique ainsi constitué.

Les télémètres laser sont des appareils de mesure de distances, qui émettent un faisceau laser de rayonnement, dit rayonnement primaire, et qui collectent une partie de ce rayonnement, dite rayonnement de retour, qui a été rétrodiffusée ou rétro-réfléchie par une cible distante du télémètre. La détermination du temps de propagation du rayonnement entre le télémètre et la cible, cumulé pour les trajets de propagation d'aller et de retour, fournit une mesure de la distance d'éloignement de la cible par rapport au télémètre. De façon générale, un tel télémètre possède donc une sortie optique pour émettre le faisceau laser de rayonnement primaire, et une entrée optique pour collecter une partie du rayonnement de retour.

On distingue communément trois types de télémètres, en fonction de la distance de séparation entre un centre optique d'une pupille d'émission qui est associée à la sortie optique, et un centre optique d'une pupille de réception qui est associée à l'entrée optique. Cette distance de séparation est appelée entre-axe des pupilles d'émission et de réception, et les trois types de télémètres sont :
- les télémètres monostatiques, pour lesquels l'entre-axe des pupilles d'émission et de réception est nul ;
- les télémètres quasi-monostatiques, pour lesquels l'entre-axe des pupilles d'émission et de réception est inférieur ou égal à 100 mm (millimètre) ; et
- les télémètres bistatiques, pour lesquels l'entre-axe des pupilles d'émission et de réception est supérieur à 100 mm.

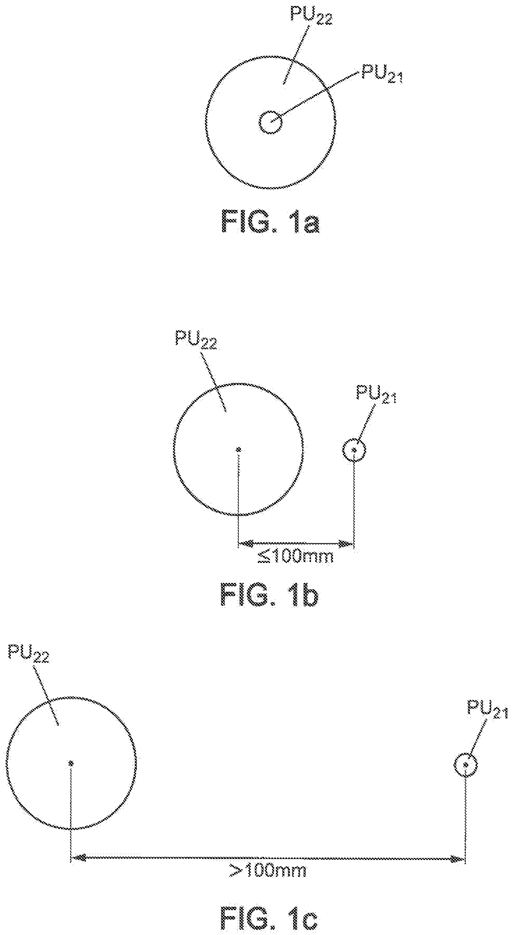

Les figures 1a à 1c illustrent ces trois types de télémètres : figure 1a pour un télémètre monostatique, figure 1b pour un télémètre quasi-monostatique, et figure 1c pour un télémètre bistatique. Dans ces figures, la référence PU₂₁ désigne la pupille de sortie du télémètre, aussi appelée pupille d'émission, et la référence PU₂₂ désigne la pupille d'entrée du télémètre, aussi appelée pupille de réception.

Parmi ces télémètres laser, ceux monostatiques ou quasi-monostatiques sont utilisés pour de nombreuses applications, à cause de leur facilité de mise en œuvre et de transport. En effet, pour un télémètre monostatique ou quasi-monostatique, la sortie et l'entrée optiques sont superposées ou juxtaposées, et le télémètre est conçu pour qu'une direction de propagation du rayonnement primaire qui est émis par la sortie optique soit identique à une direction de propagation de la partie du rayonnement de retour qui est collectée lors d'un fonctionnement de mesure du télémètre, les sens de propagation étant opposés. Ainsi, un télémètre monostatique ou quasi-monostatique peut être constitué d'un bloc unique, qui intègre tous les composants d'émission et de réception de rayonnement. Par opposition aux télémètres monostatiques ou quasi-monostatiques, les télémètres bistatiques sont composés d'un bloc d'émission du rayonnement primaire et d'un bloc de réception d'une partie du rayonnement de retour, qui sont séparés. L'utilisation d'un télémètre bistatique nécessite alors de caractériser précisément les positions relatives des deux blocs, et d'orienter la direction d'émission du rayonnement primaire et la direction de collecte du rayonnement de retour de façon à ce que ces deux directions se croisent sensiblement au niveau de la cible.

La présente invention est alors limitée au domaine des télémètres laser monostatiques ou quasi-monostatiques, c'est-à-dire des télémètres laser pour lesquels la sortie optique et l'entrée optique sont juxtaposées ou superposées avec un entre-axe de pupilles d'émission et de réception qui est nul ou inférieur ou égal à 100 mm.

De façon générale, la puissance de la partie du rayonnement de retour qui est collectée à travers l'entrée optique du télémètre est très inférieure à l'intensité du faisceau laser de rayonnement primaire qui est émis par sa sortie optique. En effet, dans la plupart des situations d'utilisation d'un télémètre laser monostatique ou quasi-monostatique, la cible provoque une absorption importante du rayonnement primaire, et/ou réfléchit ce rayonnement primaire avec un élargissement angulaire du faisceau qui est important. Le capteur optique qui est dédié, à l'intérieur du télémètre, à la détection du rayonnement de retour présente alors une sensibilité élevée, qui est adaptée pour ces conditions d'utilisation les plus courantes où le rayonnement à détecter est beaucoup moins intense que le rayonnement qui est émis.

Toutefois, il existe des situations particulières d'utilisation dans lesquelles la cible rétro-réfléchit une partie importante du rayonnement primaire, avec une direction de propagation du rayonnement réfléchi qui est identique à celle du rayonnement primaire mais avec un sens de propagation du rayonnement de retour qui est opposé à celui du rayonnement primaire. Tel est le cas, notamment, lorsque la cible est un réflecteur métallique à trois faces qui sont disposées en coin de cube. La puissance de la partie du rayonnement de retour qui est collectée par l'entrée optique du télémètre laser monostatique ou quasi-monostatique est alors supérieure à la limite de tolérance du capteur optique du télémètre, de sorte que ce capteur est alors endommagé ou détruit.

Or dans la pratique, la sensibilité élevée du capteur du télémètre qui est nécessaire pour les conditions d'utilisation les plus courantes, est contraire avec une limite de tolérance qui soit aussi élevée pour ce capteur optique.

A partir de là, un premier but de l'invention consiste à disposer d'une protection qui soit capable de préserver un télémètre laser monostatique ou quasi-monostatique contre un endommagement causé par les situations particulières d'utilisation qui viennent d'être décrites.

Un but annexe consiste à disposer d'une telle protection qui soit peu encombrante, peu onéreuse, et qui ne rende pas plus complexe l'utilisation d'un télémètre laser monostatique ou quasi-monostatique.

Pour atteindre l'un au moins de ces buts, un premier aspect de l'invention propose un procédé de protection d'un télémètre laser monostatique ou quasi-monostatique, lorsque le télémètre possède une sortie optique pour émettre un faisceau laser de rayonnement primaire, et une entrée optique pour collecter une partie d'un rayonnement de retour, et lorsque la sortie et l'entrée optiques sont juxtaposées ou superposées, avec un entre-axe de pupilles d'émission et de réception qui est nul ou inférieur ou égal à 100 mm. Le procédé de l'invention s'applique lorsque le télémètre est conçu pour qu'une direction de propagation du rayonnement primaire qui est émis par la sortie optique soit identique à une direction de propagation de la partie de rayonnement de retour qui est collectée lors d'un fonctionnement de mesure du télémètre. Le procédé comprend de fixer un module optique devant la sortie optique du télémètre laser de type monostatique ou quasi-monostatique, pour décaler transversalement le faisceau laser de rayonnement primaire qui est émis par cette sortie optique. Le module optique utilisé est tel que la direction de propagation du rayonnement primaire en aval du module optique soit identique à la direction de propagation du rayonnement primaire entre la sortie optique du télémètre et le module optique. En outre, le module optique est adapté pour produire une longueur de décalage transversal qui est comprise entre 10 cm (centimètre) et 35 cm, de préférence entre 15 cm et 20 cm, lorsqu'elle est mesurée perpendiculairement à la direction de propagation.

Pour cela, le module optique de l'invention comprend deux ensembles réflecteurs qui sont agencés sur un trajet du faisceau laser de rayonnement primaire qui est émis par le télémètre équipé du module optique, en aval de la sortie optique du télémètre, de sorte que le rayonnement primaire soit réfléchi par l'un puis par l'autre des deux ensembles réflecteurs. En outre, chaque ensemble réflecteur est adapté pour appliquer au faisceau laser de rayonnement primaire une déviation, et les déviations respectives qui sont appliquées par l'un puis par l'autre des deux ensembles réflecteurs sont opposées.

Ainsi, un module optique qui est utilisé pour produire la fonction de protection conformément à l'invention possède une structure optique simple, cette structure pouvant être limitée aux deux ensembles réflecteurs maintenus dans des positions adaptées.

De plus, étant donné que les déviations qui sont appliquées au faisceau de rayonnement primaire par l'un puis par l'autre des ensembles réflecteurs sont opposées, le module optique peut être adapté pour que le parallélisme entre les directions de propagation du faisceau de rayonnement primaire en amont et en aval du module optique ne soit pas altéré par une inclinaison de ce module autour d'au moins un axe.

Le module optique, lorsqu'il est fixé sur un télémètre laser monostatique ou quasi-monostatique, a donc pour effet de décaler transversalement la pupille d'émission du rayonnement primaire, en l'éloignant de la pupille de réception du rayonnement de retour. Alors, lorsque la cible rétro-réfléchit le rayonnement primaire en ne produisant qu'une faible dispersion angulaire, comme par exemple une cible réflectrice qui possède une forme de coin de cube rentrant, la puissance du rayonnement de retour est principalement contenue dans une section de faisceau qui est peu supérieure à la taille de la pupille d'émission du télémètre, et ce rayonnement de retour est renvoyé vers la sortie optique du module. Or grâce à l'invention, celle-ci est décalée transversalement par rapport à l'entrée optique du télémètre, si bien que cette entrée optique se trouve en dehors de la partie principale du faisceau du rayonnement de retour. La puissance de la partie du rayonnement de retour qui est collectée, et donc que reçoit le capteur optique du télémètre, est alors réduite dans une mesure qui est suffisante pour éviter l'endommagement de ce capteur optique.

En outre, étant donné les dimensions de section transversale du faisceau laser du rayonnement primaire, la valeur du décalage transversal, comprise entre 10 cm et 35 cm, est suffisante pour garantir la protection du capteur optique du télémètre, que celui-ci soit monostatique ou quasi-monostatique. Conformément à l'invention, cette valeur de décalage transversal est produite par un module optique qui peut posséder lui-même des dimensions réduites et provoquer un encombrement limité. Autrement dit, le module optique qui est utilisé dans l'invention transforme le télémètre monostatique ou quasi-monostatique en télémètre bistatique au sens des types de télémètres qui ont été énumérés précédemment, mais sans les inconvénients généraux des télémètres bistatiques.

De façon générale, les deux ensembles réflecteurs peuvent être sélectionnés pour qu'il ne soit pas nécessaire d'ajuster précisément un ou deux angle(s) d'orientation de l'ensemble du module optique par rapport au télémètre, tout en conservant l'identité entre les directions de propagation du rayonnement primaire en amont et en aval du module optique. Le module optique peut alors être fixé sur le télémètre de façon simple et rapide.

Avantageusement, chaque ensemble réflecteur peut être adapté pour appliquer au faisceau laser de rayonnement primaire une déviation qui est sensiblement indépendante d'au moins un angle d'orientation de cet ensemble réflecteur. Par «déviation sensiblement indépendante», on entend qu'une dérivée de premier ordre de la déviation qui est appliquée au faisceau laser de rayonnement primaire par l'ensemble réflecteur considéré, par rapport à l'angle d'orientation de cet ensemble réflecteur, est nulle. Autrement dit, les ensembles réflecteurs peuvent être sélectionnés pour qu'il ne soit pas nécessaire d'ajuster précisément un ou deux angle(s) d'orientation de chaque ensemble réflecteur, ce qui réduit les coûts de conception et d'assemblage du module optique.

De façon générale pour l'invention, le module optique qui est utilisé peut avantageusement être agencé en outre pour ne pas décaler transversalement la partie du rayonnement de retour qui est collectée par le télémètre lors d'un fonctionnement de mesure de celui-ci.

Dans des premiers modes de mise en œuvre de l'invention, chaque ensemble réflecteur du module optique utilisé peut comprendre une portion d'un matériau qui est transparent pour le rayonnement primaire, cette portion ayant trois faces planes réfléchissantes qui sont disposées en superposition à des zones de trois faces respectives d'un cube, réparties autour d'un sommet de ce cube. Ainsi, lorsque le module optique est fixé devant la sortie optique du télémètre, chaque ensemble réflecteur inverse le sens de propagation du rayonnement primaire en conservant la même direction de propagation, mais en produisant un décalage transversal élémentaire du faisceau laser de rayonnement primaire. Le décalage transversal qui est effectif pour le faisceau laser de rayonnement primaire entre l'aval du module optique et un intervalle qui est intermédiaire entre la sortie optique du télémètre et le module optique, est alors une addition vectorielle des décalages transversaux élémentaires qui sont produits par les deux ensembles réflecteurs. Avantageusement, chaque portion du matériau transparent peut posséder une forme de barreau, avec une première extrémité longitudinale du barreau qui comprend une face plane réfléchissante, et avec une seconde extrémité longitudinale du barreau, opposée à la première extrémité longitudinale, qui comprend un dièdre réfléchissant à angle droit, avec une arête de ce dièdre qui est perpendiculaire à la face plane réfléchissante de la première extrémité longitudinale du barreau. Autrement dit, chaque ensemble réflecteur peut avoir la forme d'un barreau qui est inscrit dans un coin de cube rentrant. Chaque ensemble réflecteur de ces premiers modes de mise en œuvre de l'invention peut alors être appelé barreau-coin-de-cube.

Dans des seconds modes de mise en œuvre de l'invention, chaque ensemble réflecteur du module optique utilisé peut comprendre une équerre optique à base d'un pentaprisme qui possède deux faces planes réfléchissantes, de sorte que lorsque le module optique est fixé devant la sortie optique du télémètre, chaque ensemble réflecteur dévie à angle droit la direction de propagation du rayonnement primaire. Pour de tels seconds modes de mise en œuvre de l'invention, une liaison mécanique entre les deux ensembles réflecteurs est de préférence rigide ou indéformable.

Dans des troisièmes modes de mise en œuvre de l'invention, chaque ensemble réflecteur peut être un miroir plan, et le module optique est agencé de sorte que les deux miroirs plans soient parallèles. Alors, l'identité entre les directions de propagation du rayonnement primaire en amont des deux miroirs plans et en aval de ceux-ci n'est pas altérée si les deux miroirs sont modifiés en orientation tout en restant parallèles l'un à l'autre. En particulier, le module optique peut comprendre un rhomboèdre de matériau transparent, dont deux faces opposées sont réfléchissantes pour produire des réflexions du rayonnement primaire qui sont internes au rhomboèdre de matériau transparent. Ainsi, chacune des deux faces réfléchissantes du rhomboèdre forme l'un des deux ensembles réflecteurs. De préférence, un angle de coin de certaines au moins des faces du rhomboèdre peut être compris entre 40° (degré) et 50°, notamment égal à 45°.

En outre, l'une des caractéristiques suivantes peut avantageusement être appliquée dans des perfectionnements de l'invention, seule ou en combinaison de plusieurs d'entre elles :
- chaque face plane réfléchissante des ensembles réflecteurs du module optique utilisé peut posséder une surface qui est inférieure à 9 cm², de préférence inférieure à 4 cm². Le module optique peut ainsi être de dimensions réduites et être peu encombrant ;
- le module optique utilisé peut comprendre en outre au moins un diasporamètre optique, qui est adapté pour compenser un défaut d'identité entre la direction de propagation du rayonnement primaire en aval du module optique et la direction de propagation du rayonnement primaire dans l'intervalle entre la sortie optique du télémètre et le module optique, lorsque le module optique est fixé devant la sortie optique du télémètre ; et
- le module optique utilisé peut comprendre en outre des moyens de fixation démontables, qui sont adaptés pour fixer ce module optique de façon amovible sur le télémètre laser monostatique ou quasi-monostatique, de sorte que le module optique fixé soit efficace pour le faisceau laser de rayonnement primaire qui est émis par la sortie optique du télémètre.

L'ensemble télémétrique obtenu, comprenant le télémètre laser et le module optique fixé devant sa sortie optique, peut être intégré à un ensemble de visée optique, un ensemble de pointage optique, un ensemble de désignation optique de cible, ou une tête à capteurs multiples qui est destinée à caractériser un environnement.

D'autres particularités et avantages de la présente invention apparaîtront dans la description ci-après d'exemples de mises en œuvre non limitatifs, en référence aux dessins annexés, dans lesquels :
- les figures 1a à 1c, déjà décrites, illustrent une distinction entre trois types de télémètres : monostatique, quasi-monostatique et bistatique ;
- la figure 2 est vue en perspective d'un module optique qui peut être utilisé dans un premier mode de mise en œuvre de l'invention ;
- la figure 3 illustre le principe géométrique de conception d'un ensemble réflecteur tel qu'utilisé dans le mode de mise en œuvre de la figure 2 ;
- la figure 4 correspond à la figure 2 pour un second mode de mise en œuvre de l'invention ;
- la figure 5 correspond à la figure 2 pour un troisième mode de mise en œuvre de l'invention ; et
- les figures 6a et 6b montrent deux exemples d'utilisation de l'invention.

Pour raison de clarté, les dimensions des éléments qui sont représentés dans ces figures ne correspondent ni à des dimensions réelles ni à des rapports de dimensions réels. En outre, des références identiques qui sont indiquées dans des figures différentes désignent des éléments identiques ou qui ont des fonctions identiques.

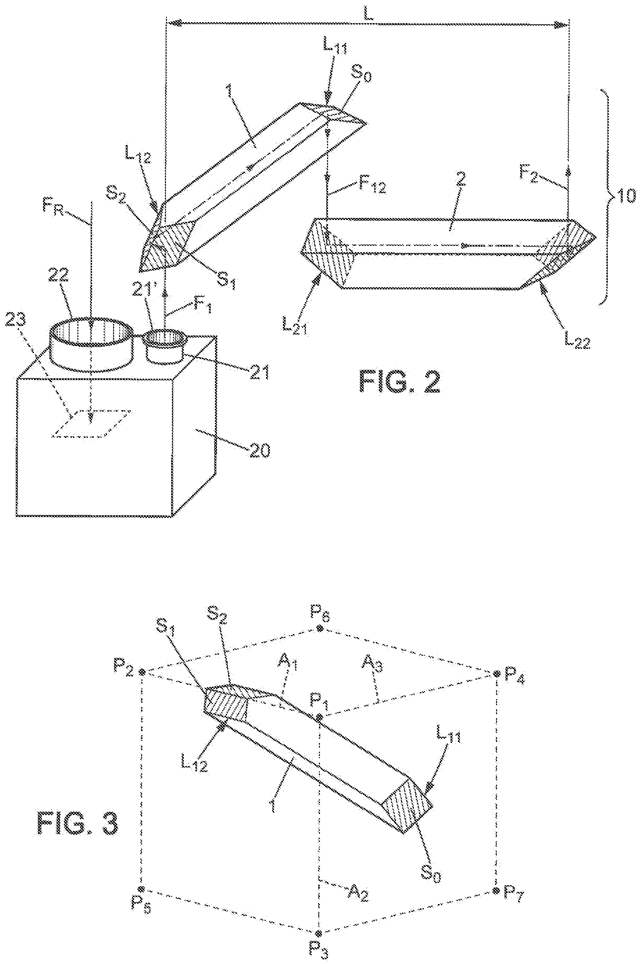

Conformément à la figure 2, un télémètre laser quasi-monostatique 20 comporte une sortie optique de rayonnement laser 21, ainsi qu'une entrée optique 22 qui est juxtaposée à la sortie 21. Un tel télémètre quasi-monostatique est conforme à la figure 1b. Un télémètre monostatique 20 peut être utilisé de façon équivalente, dans lequel la sortie optique 21 et l'entrée optique 22 sont superposées, comme représenté sur la figure 1a. Le télémètre 20 est conçu pour produire un faisceau laser F₁, dit faisceau laser de rayonnement primaire, par la sortie optique 21. Le faisceau F₁ possède une structure de faisceau parallèle, et peut avoir une longueur d'onde qui est comprise entre 0,360 µm (micromètre) et 3 µm, par exemple égale à 1,5 µm, avec un diamètre de faisceau qui est inférieur à 12 mm (millimètre), par exemple. Dans ce cas, la sortie optique 21 peut posséder des dimensions transversales qui sont inférieures à 15 ou 20 mm.

L'entrée optique 22 est destinée à collecter une partie F_{R} du rayonnement du faisceau laser F₁, après propagation du faisceau F₁ jusqu'à une cible (non représentée), rétrodiffusion par celle-ci et propagation en retour à partir de la cible jusqu'à l'entrée optique 22. F_{R} a été appelée rayonnement de retour dans la partie générale de la présente description. Une distance de séparation entre les axes optiques respectifs de pupilles de la sortie optique 21 et de l'entrée optique 22 est donc inférieure ou égale à 100 mm. Un tel fonctionnement de télémètre laser monostatique ou quasi-monostatique, pour fournir une mesure de la distance d'éloignement de la cible par rapport au télémètre, est connu de l'Homme du métier. De façon générale, à cause du fait que la rétrodiffusion du faisceau F₁ par la cible soit répartie à travers un angle solide important, et/ou parce que la rétrodiffusion par la cible est accompagnée d'absorption, la puissance de la partie du rayonnement de retour F_{R} qui est collectée par l'entrée optique 22 du télémètre 20 est très inférieure à celle du faisceau laser F₁. Pour cette raison, l'entrée optique 22 possède en général une surface de section qui est supérieure à celle de la sortie optique 21. La référence 23 désigne un capteur optique qui est utilisé à l'intérieur du télémètre 20, en aval de l'entrée optique 22, pour détecter la partie collectée du rayonnement de retour F_{R}.

Toutefois, dans certaines situations, la réflexion du faisceau laser F₁ sur la cible peut être intense, et dirigée précisément vers la sortie optique 21 du télémètre 20. Tel est le cas, notamment, lorsque la cible est un coin de cube réfléchissant rentrant. Alors, la puissance de rayonnement qui est reçue par le capteur 23 est très importante, de sorte que ce capteur 23 risque d'être endommagé. Mais dans de telles situations, le rayonnement de retour F_{R} forme un faisceau quasi-parallèle ou parallèle, qui possède une section transversale limitée. Alors, décaler la sortie optique 21 de l'entrée optique 22 suffit à supprimer la plupart des risques de dégradation du détecteur 23. Une longueur de décalage qui est comprise entre 10 cm et 35 cm, et possiblement entre 15 cm et 20 cm, est suffisante. L'Homme du métier comprendra que décaler la sortie optique 21 de l'entrée optique 22 signifie écarter l'une de l'autre la pupille d'émission effective et la pupille de réception du télémètre 20.

Pour cela, deux ensembles réflecteurs, désignés respectivement par les références 1 et 2, sont combinés dans un module optique 10 qui est destiné à être monté devant la sortie optique 21, pour déplacer transversalement la pupille d'émission effective du faisceau laser F₁, afin de l'éloigner de l'entrée optique 22. De préférence, le module optique 10 n'affecte pas la partie du rayonnement de retour F_{R} qui est collectée par l'entrée optique 22.

Conformément à un premier mode de mise en œuvre de l'invention qui est illustré par la figure 2, chaque ensemble réflecteur 1, 2 peut être formé par un coin de cube rentrant et réfléchissant. Dans ce cas, le faisceau laser de rayonnement primaire F₁ est réfléchi par chaque ensemble réflecteur 1, 2 parallèlement à lui-même, en inversant son sens de propagation. Les deux ensembles réflecteurs 1 et 2, combinés pour réfléchir le faisceau laser F₁ l'un après l'autre, renvoient ce faisceau laser F₁ encore parallèlement à la direction de propagation qu'il possédait entre la sortie optique 21 du télémètre 20 et le module 10, et avec un sens de propagation qui est aussi identique. Toutefois, chaque ensemble réflecteur 1, 2 décale la pupille d'émission du faisceau F₁, et le décalage total de cette pupille d'émission résulte de l'addition vectorielle des deux décalages élémentaires qui sont produits par l'ensemble réflecteur 1 et par l'ensemble réflecteur 2, respectivement. Dans la figure, L désigne la longueur du décalage total.

Selon un mode de mise en œuvre préféré de l'invention, chaque ensemble réflecteur 1, 2 peut être constitué d'un barreau rectiligne de matériau transparent, par exemple du verre, dont les faces d'extrémité se superposent à trois faces d'un cube qui sont adjacentes à un même sommet du cube. La figure 3 montre le principe d'une telle superposition pour l'ensemble réflecteur 1. P₁, P₂, ..., P₇ désignent sept sommets visibles du cube, et A₁, A₂ et A₃ désignent les trois arêtes du cube qui concourent au sommet P₁. Le barreau de l'ensemble réflecteur 1 peut avoir une section transversale quelconque, mais de préférence avec une face latérale plane qui constitue à la fois la face d'entrée et la face de sortie du faisceau laser F₁ dans le barreau. Une première extrémité longitudinale L₁₁ du barreau peut être constituée d'une face plane S₀ qui est superposée à une partie de la face P₁P₃P₇P₄ du cube, et l'autre extrémité longitudinale L₁₂ du barreau peut être à cheval sur l'arête A₁, entre les sommets P₁ et P₂. L'extrémité longitudinale L₁₂ du barreau est ainsi constituée par une face plane S₁ qui est superposée à une partie de la face P₁P₂P₅P₃ du cube, et aussi par une autre face plane S₂ qui est superposée à une partie de la face P₁P₂P₆P₄ du cube. Autrement dit, les faces S₁ et S₂ forment un dièdre à angle droit, avec une arête de ce dièdre qui est perpendiculaire à la face S₀. Les faces d'extrémités S₀, S₁ et S₂ sont avantageusement métallisées pour être réfléchissantes pour le rayonnement primaire. Alors, si le faisceau laser F₁ entre dans le barreau de verre de l'ensemble réflecteur 1 à travers l'une de ses faces latérales en se réfléchissant ensuite sur l'une puis sur l'autre des deux faces S₁ et S₂ de l'extrémité L₁₂, de façon interne au barreau, il peut se propager longitudinalement dans le barreau de verre jusqu'à être réfléchi par la face S₀ de l'extrémité L₁₁ avant de ressortir à travers la même face latérale que celle de son entrée. En outre, des déviations de réfraction qui affectent le faisceau laser F₁ à son entrée dans le barreau de verre, et à sa sortie de ce même barreau, peuvent être opposées si bien que la direction de propagation du faisceau laser F₁ n'est pas modifiée entre avant son entrée et après sa sortie du barreau, mais seulement le sens de propagation du faisceau laser F₁ est inversé. La longueur du barreau de verre détermine celle du décalage entre la pupille de sortie qui est effective pour le faisceau laser F₁ après l'ensemble réflecteur 1, et la pupille d'émission de la sortie optique 21. L'Homme du métier comprendra que l'ensemble réflecteur 1 qui vient être décrit peut être retourné, de sorte que le faisceau laser F₁ entre dans le barreau de verre pour être d'abord réfléchi par la face d'extrémité S₀, puis se propage longitudinalement dans le barreau de verre, et soit réfléchi ensuite par les faces d'extrémités S₁ et S₂ avant de ressortir du barreau de verre.

Il est connu que l'inversion du sens de propagation du faisceau laser F₁ le long d'une même direction de propagation, telle qu'elle vient d'être décrite pour une utilisation du barreau de verre à partir de l'extrémité L₁₂ vers l'extrémité L₁₁, ou de l'extrémité L₁₁ vers l'extrémité L₁₂, est obtenue quelle que soit l'orientation angulaire du barreau tant que le faisceau laser F₁ reste à l'intérieur du barreau entre ses deux extrémités. Autrement dit, l'inversion du sens de propagation du faisceau laser F₁ le long de sa direction initiale de propagation est indépendante de deux angles de coordonnées polaires, qui définissent l'orientation longitudinale du barreau, lorsque chacun des deux angles varient dans un intervalle de longueur non nulle.

L'ensemble réflecteur 2 peut avoir une constitution similaire : il peut être constitué d'un autre barreau de verre en coin de cube, dont l'une des extrémités L₂₁ peut être formée par une partie de face du cube, et l'autre extrémité L₂₂ peut être à cheval sur une arête du cube. Dans la figure 2, F₁ désigne le faisceau laser de rayonnement primaire dans l'intervalle entre la sortie optique 21 du télémètre 20 et l'ensemble réflecteur 1, F₁₂ désigne le même faisceau laser mais entre les deux ensembles réflecteurs 1 et 2, et F₂ désigne encore le même faisceau laser mais après avoir été réfléchi par l'ensemble réflecteur 2. Les directions longitudinales respectives des deux barreaux de verre des ensembles réflecteurs 1 et 2 peuvent former entre elles un angle quelconque, en projection dans un plan qui est perpendiculaire au faisceau laser F₁. En outre, les deux ensembles réflecteurs 1 et 2 peuvent être écartés l'un de l'autre d'une distance quelconque le long du faisceau F₁₂.

Il est répété qu'un avantage du mode de mise en œuvre de l'invention qui vient d'être décrit en relation avec les figures 2 et 3, réside dans le fait qu'aucun alignement angulaire n'est nécessaire pour les deux ensembles réflecteurs 1 et 2, que ce soit l'un par rapport à l'autre, ou que ce soit par rapport à la direction d'émission du faisceau laser F₁ au niveau de la sortie optique 21 du télémètre 20. En effet, de façon générale pour ce type de mise en œuvre de l'invention qui est basée sur une géométrie de coins de cubes rentrants et réfléchissants, les déviations du faisceau laser qui sont produites par les deux ensembles réflecteurs 1 et 2, sont chacune égales à 180° en valeur absolue, et donc automatiquement opposées en sens.

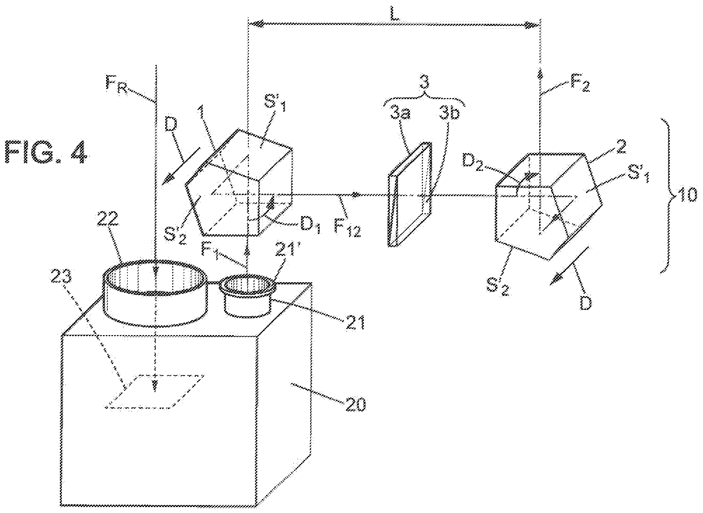

La figure 4 correspond à la figure 2 lorsque chacun des éléments réflecteurs 1 et 2 est constitué par un pentaprisme de matériau transparent, par exemple en verre. Le pentaprisme est un composant optique conçu pour dévier un faisceau lumineux à angle droit, bien connu de l'Homme du métier et appartenant à la catégorie des composants appelés équerres optiques. Chaque pentaprisme possède une face plane d'entrée, deux faces planes réfléchissantes notées S'₁ et S'₂, et une face plane de sortie, dans l'ordre des faces le long du chemin du faisceau laser F₁. De préférence, les faces planes réfléchissantes S'₁ et S'₂ sont métallisées pour augmenter l'intensité de chaque réflexion interne du faisceau laser F₁. Chacun des deux pentaprismes qui forment les éléments réflecteurs 1 et 2, dévie le faisceau laser de rayonnement primaire F₁ de 90° (degré), l'un à la suite de l'autre. Dans la figure 4, D₁ et D₂ désignent les déviations du faisceau laser F₁ qui sont produites respectivement par les deux pentaprismes, égales chacune à 90° en valeur absolue mais opposées en sens. Aussi de façon connue, chaque déviation D₁ ou D₂ du faisceau laser F₁ qui est produite par l'un des pentaprismes est indépendante, au premier ordre, d'un angle d'orientation de ce pentaprisme autour d'une direction notée D qui est parallèle simultanément aux deux faces planes réfléchissantes du pentaprisme. «Au premier ordre» signifie que la déviation du faisceau laser F₁ varie peu autour de la valeur 90° lorsque l'orientation du pentaprisme autour de la direction D est variée dans une mesure limitée, de part et d'autre de l'orientation pour laquelle le faisceau laser F₁ traverse perpendiculairement chacune des faces d'entrée et de sortie de ce pentaprisme. Plus précisément, la dérivée de la déviation du faisceau laser F₁ qui est produite par le pentaprisme, par rapport à l'orientation de ce pentaprisme autour de la direction D, est nulle lorsque la déviation est égale à 90°.

Toutefois, le parallélisme entre le faisceau laser F₁ d'une part, tel qu'il existe dans l'intervalle entre la sortie optique 21 du télémètre 20 et l'ensemble réflecteur 1, et le faisceau laser F₂ d'autre part, tel que ce dernier existe en aval de l'ensemble réflecteur 2, peut être altéré par un défaut d'orientation de l'un au moins des pentaprismes, surtout un tel défaut d'orientation autour d'une autre direction que la direction D. Pour compenser un tel défaut, il est possible d'ajouter, à l'intérieur du module optique 10, un diasporamètre optique 3, de préférence entre les ensembles réflecteurs 1 et 2, mais aussi possiblement en amont de l'ensemble réflecteur 1 ou en aval de l'ensemble réflecteur 2. D'une façon qui est aussi connue de l'Homme du métier, le diasporamètre optique 3 comprend deux lames transparentes 3a et 3b juxtaposées, chacune d'elles ayant deux faces opposées qui forment entre elles un angle qui est faible, mais non nul, par exemple compris entre 0,1° et 1,5°, les deux lames ayant la même valeur d'angle. Alors, l'orientation de chacune des lames du diasporamètre 3 autour du faisceau laser peut permettre de compenser un défaut d'alignement angulaire de l'un au moins des deux pentaprismes, et plus généralement de l'un au moins des deux ensembles réflecteurs 1 et 2.

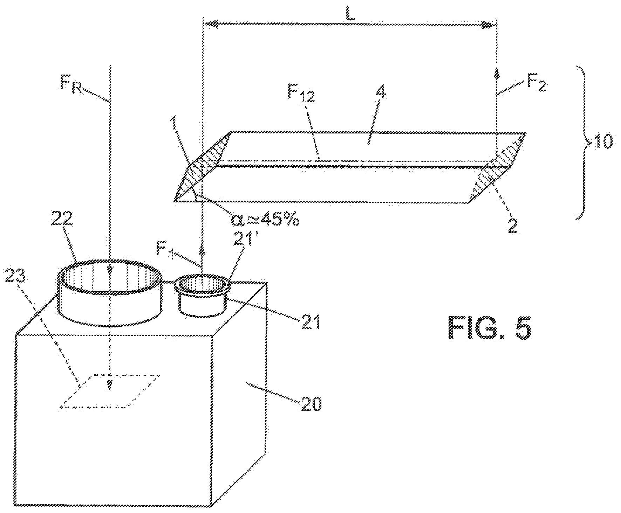

La figure 5 correspond à la figure 2 pour des modes de mise en œuvre de l'invention où le module optique 10 comporte deux miroirs plans parallèles 1 et 2. Par exemple, pour garantir que les deux miroirs plans 1 et 2 restent parallèles, ils peuvent être formés par deux faces opposées d'un rhomboèdre 4 en matériau transparent solide. Ces deux faces opposées peuvent être rendues réfléchissantes par métallisation ou dépôt d'empilements de couches diélectriques multiples. Un angle de coin α de certaines des faces latérales du rhombodèdre 4, qui sont situées entre les faces opposées réfléchissantes, peut être égal à 45°. Le faisceau laser F₁ du rayonnement primaire pénètre alors dans le rhomboèdre 4 par l'une des faces latérales de celui-ci, dite face d'entrée, puis est réfléchi par la face-miroir 1 de façon interne au rhomboèdre 4. Il se propage ensuite vers la face-miroir 2 dans le matériau transparent du rhomboèdre 4, sous la forme du faisceau intermédiaire F₁₂, puis est réfléchi par la face-miroir 2 encore de façon interne au rhomboèdre 4, et ressort du rhomboèdre 4 par une autre face latérale de celui-ci, qui est opposée à la face latérale d'entrée, en formant le faisceau laser F₂ qui est parallèle au faisceau F₁. Les faces-miroirs 1 et 2 ont des aires suffisantes, de préférence supérieures à 1,0 cm², pour réfléchir une partie principale de l'énergie du faisceau laser F₁ en fonction de la section transversale de ce faisceau. En outre, la direction de propagation du faisceau laser F₂ reste identique à celle du faisceau laser F₁ lorsque le rhomboèdre 4 est incliné autour d'un axe quelconque.

Pour les trois modes de mise en œuvre qui viennent d'être décrits, en référence aux figures 2, 4 et 5 respectivement, les éléments réflecteurs 1 et 2 ont des sections transversales suffisantes pour transmettre une partie principale de l'énergie du faisceau laser F₁. Pour cela, des faces planes réfléchissantes qui sont des aires supérieures à 1,0 cm² peuvent être suffisantes, en fonction de la section transversale du faisceau laser F₁.

Les deux ensembles réflecteurs 1 et 2, et éventuellement aussi le diasporamètre optique 3, sont maintenus dans des positions relatives qui sont fixes à l'intérieur du module 10. Avantageusement, le module 10 et/ou la sortie 21 du télémètre 20 peut (peuvent) être équipé(s) d'au moins une bague d'assemblage 21' en amont de l'ensemble réflecteur 1, qui est adaptée pour assembler de façon amovible le module 10 sur le télémètre 20, devant la sortie optique 21. Le télémètre laser monostatique ou quasi-monostatique 20 qui est ainsi équipé du module optique 10 a été appelé ensemble télémétrique dans la partie générale de la présente description. Possiblement aussi, le module 10 peut être fixe sur le télémètre laser monostatique ou quasi-monostatique 20 au sein de l'appareil télémétrique, c'est-à-dire sans possibilité de démontage. Dans ce cas, la liaison entre le module 10 et la sortie optique 21 peut être simplifiée.

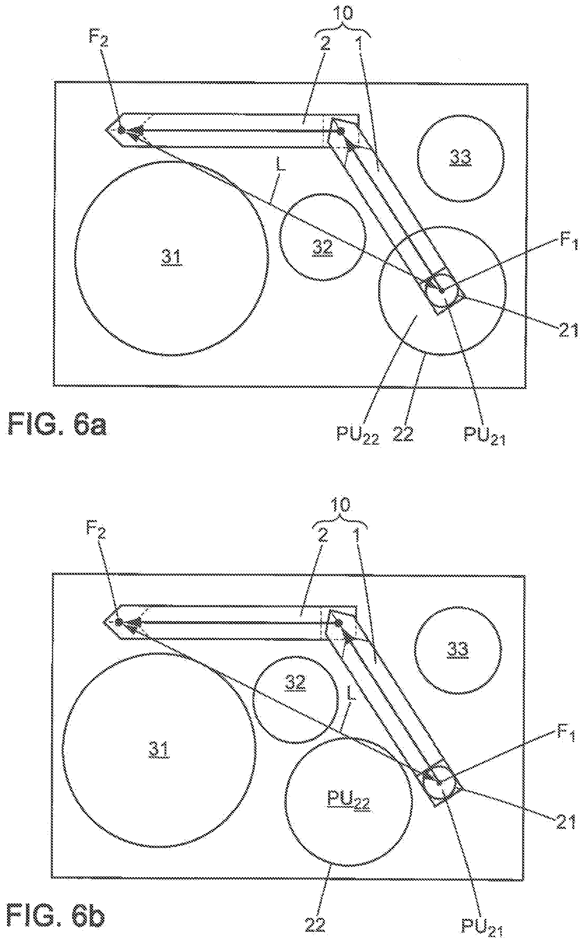

Eventuellement, un ensemble télémétrique tel qu'obtenu par un procédé conforme à l'invention peut être incorporé dans une tête à capteurs multiples qui est destinée à caractériser un environnement. L'ensemble de la tête à capteurs multiples peut alors être monté sur un support orientable, avec les entrées optiques, sorties optiques et fenêtres de détection des capteurs qui sont regroupées dans une surface utile de la tête qui est limitée. Dans ce cas, il peut être avantageux d'utiliser une mise en œuvre de l'invention du type de la figure 2, et dans laquelle un angle non nul entre les directions longitudinales des deux barreaux de verre permet de disposer le module 10 dans la surface utile de la tête à capteurs multiples sans masquer une entrée optique, une sortie optique ou une fenêtre de détection d'aucun capteur. La figure 6a montre un télémètre monostatique 20, qui est conforme à la figure 1a et qui est muni du module optique 10 conforme à la figure 2. De même, La figure 6b montre un télémètre quasi-monostatique 20, qui est conforme à la figure 1b et qui est aussi muni du module optique 10 de la figure 2. Dans ces figures 6a et 6b, et à titre d'exemple, les références 31, 32 et 33 désignent des pupilles de réception d'un capteur infrarouge, d'un capteur de rayonnement visible à grand angle de vue, et d'un capteur de rayonnement visible à téléobjectif, qui ne sont pas masquées par le module optique 10. La longueur de décalage L entre les faisceaux F₁ et F₂ est aussi indiquée dans ces deux figures.

Il est entendu que l'invention peut être reproduite en adaptant ou modifiant des aspects secondaires de celle-ci par rapport aux modes de mise en œuvre qui ont été décrits en détail ci-dessus, tout en conservant certains au mois des avantages cités. On rappelle que l'avantage principal est de procurer une protection du télémètre laser monostatique ou quasi-monostatique contre une rétro-réflexion spéculaire du faisceau laser de rayonnement primaire par une cible, lors de laquelle le faisceau de retour serait superposé au faisceau laser de rayonnement primaire.

## Revendications

1. Procédé de protection d'un télémètre laser monostatique ou quasi-monostatique (20), ledit télémètre ayant une sortie optique (21) pour émettre un faisceau laser de rayonnement primaire (F₁), et une entrée optique (22) pour collecter une partie d'un rayonnement de retour (F_{R}), la sortie et l'entrée optiques étant juxtaposées ou superposées, avec un entre-axe de pupilles d'émission et de réception qui est nul ou inférieur ou égal à 100 mm, et le télémètre étant conçu pour qu'une direction de propagation du rayonnement primaire qui est émis par la sortie optique soit identique à une direction de propagation de la partie de rayonnement de retour qui est collectée lors d'un fonctionnement de mesure du télémètre,
le procédé comprenant de fixer devant la sortie optique (21) du télémètre (20), un module optique de façon à décaler transversalement le faisceau laser de rayonnement primaire (F₁),
le module optique (10) étant tel qu'une direction de propagation du rayonnement primaire en aval du module optique soit identique à une direction de propagation dudit rayonnement primaire entre la sortie optique du télémètre et ledit module optique, avec une longueur (L) de décalage transversal qui est comprise entre 10 cm et 35 cm, de préférence entre 15 cm et 20 cm, mesurée perpendiculairement à la direction de propagation, ledit module optique comprenant deux ensembles réflecteurs (1, 2) qui sont agencés sur un trajet du faisceau laser de rayonnement primaire qui est émis par le télémètre équipé du module optique, en aval de la sortie optique du télémètre, de sorte que le rayonnement primaire soit réfléchi par l'un puis par l'autre des deux ensembles réflecteurs, chaque ensemble réflecteur étant adapté pour appliquer au faisceau laser de rayonnement primaire une déviation, et les déviations respectives qui sont appliquées par l'un puis par l'autre des deux ensembles réflecteurs étant opposées.

2. Procédé selon la revendication 1, dans lequel le module optique (10) est agencé en outre pour ne pas décaler transversalement la partie du rayonnement de retour (F_{R}) qui est collectée par le télémètre (20) lors du fonctionnement de mesure dudit télémètre, ledit rayonnement de retour résultant d'une rétrodiffusion ou rétro-réflexion du rayonnement primaire par une cible distante du télémètre.

3. Procédé selon la revendication 1 ou 2, dans lequel chaque ensemble réflecteur (1, 2) du module optique (10) comprend une portion d'un matériau qui est transparent pour le rayonnement primaire, ladite portion ayant trois faces planes réfléchissantes (S₀, S₁, S₂) qui sont disposées en superposition à des zones de trois faces respectives d'un cube, réparties autour d'un sommet du cube (P₁), de sorte que lorsque le module optique est fixé devant la sortie optique (21) du télémètre (20), chaque ensemble réflecteur inverse un sens de propagation du rayonnement primaire (F₁) en conservant la même direction de propagation, mais en produisant un décalage transversal élémentaire du faisceau laser de rayonnement primaire, le décalage transversal effectif pour ledit faisceau laser de rayonnement primaire entre l'aval du module optique et un intervalle qui est intermédiaire entre la sortie optique du télémètre et ledit module optique, étant une addition vectorielle des décalages transversaux élémentaires qui sont produits par les deux ensembles réflecteurs.

4. Procédé selon la revendication 3, dans lequel chaque portion du matériau transparent possède une forme de barreau, avec une première extrémité longitudinale (L₁₁, L₂₁) du barreau qui comprend une face plane réfléchissante (S₀), et avec une seconde extrémité longitudinale (L₁₂, L₂₂) du barreau, opposée à ladite première extrémité longitudinale, qui comprend un dièdre réfléchissant à angle droit, avec une arête dudit dièdre qui est perpendiculaire à la face plane réfléchissante de la première extrémité longitudinale du barreau.

5. Procédé selon la revendication 1 ou 2, dans lequel chaque ensemble réflecteur (1, 2) du module optique (10) comprend une équerre optique à base d'un pentaprisme qui possède deux faces planes réfléchissantes (S'₁, S'₂), de sorte que lorsque le module optique est fixé devant la sortie optique (21) du télémètre (20), chaque ensemble réflecteur dévie à angle droit la direction de propagation du rayonnement primaire (F₁).

6. Procédé selon la revendication 1 ou 2, dans lequel chaque ensemble réflecteur (1, 2) du module optique (10) est un miroir plan, et le module optique est agencé de sorte que les deux miroirs plans soient parallèles.

7. Procédé selon la revendication 6, dans lequel le module optique (10) comprend un rhomboèdre (4) de matériau transparent, dont deux faces opposées sont réfléchissantes pour produire des réflexions du rayonnement primaire qui sont internes au rhomboèdre de matériau transparent, chacune des deux faces réfléchissantes du rhomboèdre formant l'un des deux ensembles réflecteurs (1, 2).

8. Procédé selon l'une quelconque des revendications précédentes, dans lequel chaque face plane réfléchissante des ensembles réflecteurs (1, 2) du module optique (10) possède une surface inférieure à 9 cm², de préférence inférieure à 4 cm².

9. Procédé selon l'une quelconque des revendications précédentes, dans lequel le module optique (10) comprend en outre au moins un diasporamètre optique (3) adapté pour compenser un défaut d'identité entre la direction de propagation du rayonnement primaire (F₁) en aval du module optique et la direction de propagation dudit rayonnement primaire dans l'intervalle entre la sortie optique (21) du télémètre (20) et ledit module optique, lorsque le module optique est fixé devant la sortie optique du télémètre.

10. Procédé selon l'une quelconque des revendications précédentes, dans lequel le module optique (10) comprend en outre des moyens de fixation démontables, qui sont adaptés pour fixer le module optique de façon amovible sur le télémètre laser monostatique ou quasi-monostatique (20), de sorte que le module optique fixé soit efficace pour le faisceau laser de rayonnement primaire (F₁) qui est émis par la sortie optique (21) du télémètre.

11. Procédé selon l'une quelconque des revendications précédentes, dans lequel le télémètre laser (20) et le module optique (10) fixé devant la sortie optique (21) dudit télémètre laser, sont compris dans un ensemble télémétrique, ledit ensemble télémétrique étant intégré à un ensemble de visée optique, un ensemble de pointage optique, un ensemble de désignation optique de cible, ou une tête à capteurs multiples qui est destinée à caractériser un environnement.

## Patentansprüche

1. Verfahren zum Schutz eines monostatischen oder quasi-monostatischen Laser-Entfernungsmessers (20), wobei der Entfernungsmesser einen optischen Ausgang (21) zur Emission eines Primärstrahlungs-Laserbündels (F₁) und einen optischen Eingang (22) zur Sammlung eines Anteils einer Rückstrahlung (F_{R}) aufweist, wobei der optische Eingang und Ausgang nebeneinander oder übereinander gelagert sind, mit einem Achsabstand von Emissions- und Empfangspupillen, der null oder kleiner als oder gleich 100 mm ist, und wobei der Entfernungsmesser dafür ausgelegt ist, dass eine Ausbreitungsrichtung der Primärstrahlung, die vom optischen Ausgang emittiert wird, mit einer Ausbreitungsrichtung des Rückstrahlungsanteils identisch ist, der bei einem Messbetrieb des Entfernungsmessers gesammelt wird,
das Verfahren umfassend Befestigen eines optischen Moduls vor dem optischen Ausgang (21) des Entfernungsmessers (20), so dass das Primärstrahlungs-Laserbündel (F₁) in Querrichtung versetzt wird,
wobei das optische Modul (10) so beschaffen ist, dass eine Ausbreitungsrichtung der Primärstrahlung stromab des optischen Moduls mit einer Ausbreitungsrichtung der Primärstrahlung zwischen dem optischen Ausgang des Entfernungsmessers und dem optischen Modul identisch ist, mit einer Querversatzlänge (L), die zwischen 10 cm und 35 cm, vorzugsweise zwischen 15 cm und 20 cm beträgt, die senkrecht zur Ausbreitungsrichtung gemessen wird, wobei das optische Modul zwei Reflektoranordnungen (1, 2) umfasst, die auf einem Weg des Primärstrahlungs-Laserbündels, das vom Entfernungsmesser emittiert wird, der mit dem optischen Modul ausgerüstet ist, stromab des optischen Ausgangs des Entfernungsmessers angeordnet sind, damit die Primärstrahlung von der einen, dann von der anderen der zwei Reflektoranordnungen reflektiert wird, wobei jede Reflektoranordnung geeignet ist, auf das Primärstrahlungs-Laserbündel eine Ablenkung anzuwenden, und wobei die jeweiligen Ablenkungen, die von einer, dann von der anderen der zwei Reflektoranordnungen angewandt werden, entgegengesetzt sind.

2. Verfahren nach Anspruch 1, wobei das optische Modul (10) ferner angeordnet ist, den Anteil der Rückstrahlung (F_{R}) nicht in Querrichtung zu versetzen, der vom Entfernungsmesser (20) beim Messbetrieb des Entfernungsmessers gesammelt wird, wobei die Rückstrahlung aus einer Rückstreuung oder Rückreflexion der Primärstrahlung von einem Ziel resultiert, das vom Entfernungsmesser entfernt ist.

3. Verfahren nach Anspruch 1 oder 2, wobei jede Reflektoranordnung (1, 2) des optischen Moduls (10) einen Abschnitt aus einem Material umfasst, das für die Primärstrahlung transparent ist, wobei der Abschnitt drei reflektierende ebene Flächen (S₀, S₁, S₂) aufweist, die Bereichen dreier jeweiliger Flächen eines Würfels überlagert angeordnet sind, die um eine Ecke des Würfels (P₁) verteilt sind, so dass das optische Modul vor dem optischen Ausgang (21) des Entfernungsmessers (20) befestigt ist, wobei jede Reflektoranordnung einen Ausbreitungssinn der Primärstrahlung (F₁) umkehrt, indem dieselbe Ausbreitungsrichtung beibehalten wird, jedoch ein elementarer Querversatz des Primärstrahlungs-Laserbündels erzeugt wird, wobei der effektive Querversatz für das Primärstrahlungs-Laserbündel zwischen der Stromaufwärtsseite des optischen Moduls und einem Intervall, das zwischen dem optischen Ausgang des Entfernungsmessers und dem optischen Modul liegt, eine Vektoraddition der elementaren Querversätze ist, die von den zwei Reflektoranordnungen erzeugt werden.

4. Verfahren nach Anspruch 3, wobei jeder Abschnitt des transparenten Materials eine Stangenform aufweist, mit einem ersten Längsende (L₁₁, L₂₁) der Stange, das eine reflektierende ebene Fläche (S₀) umfasst, und mit einem zweiten Längsende (L₁₂, L₂₂) der Stange gegenüber dem ersten Längsende, das einen rechtwinkligen reflektierenden Dieder umfasst, mit einer Kante des Dieders, die senkrecht zur reflektierenden ebenen Fläche des ersten Längsendes der Stange verläuft.

5. Verfahren nach Anspruch 1 oder 2, wobei jede Reflektoranordnung (1, 2) des optischen Moduls (10) einen optischen Winkel auf Basis eines Pentaprismas umfasst, der zwei reflektierende ebene Flächen (S'₁, S'₂) aufweist, so dass, wenn das optische Modul vor dem optischen Ausgang (21) des Entfernungsmessers (20) befestigt ist, jede Reflektoranordnung die Ausbreitungsrichtung der Primärstrahlung (F₁) im rechten Winkel ablenkt.

6. Verfahren nach Anspruch 1 oder 2, wobei jede Reflektoranordnung (1, 2) des optischen Moduls (10) ein ebener Spiegel ist und das optische Modul so angeordnet ist, dass die zwei ebenen Spiegel parallel verlaufen.

7. Verfahren nach Anspruch 6, wobei das optische Modul (10) einen Rhomboeder (4) aus transparentem Material umfasst, dessen zwei gegenüberliegende Flächen reflektierend sind, um Reflexionen der Primärstrahlung zu erzeugen, die im Inneren des Rhomboeders aus transparentem Material sind, wobei jede der zwei reflektierenden Flächen des Rhomboeders eine der zwei Reflektoranordnungen (1, 2) bildet.

8. Verfahren nach einem der vorhergehenden Ansprüche, wobei jede reflektierende ebene Fläche der Reflektoranordnungen (1, 2) des optischen Moduls (10) eine Fläche unter 9 cm², vorzugsweise unter 4 cm² aufweist.

9. Verfahren nach einem der vorhergehenden Ansprüche, wobei das optische Modul (10) ferner mindestens ein optisches Diasporameter (3) umfasst, das geeignet ist, einen Identitätsfehler zwischen der Ausbreitungsrichtung der Primärstrahlung (F₁) stromab des optischen Moduls und der Ausbreitungsrichtung der Primärstrahlung in dem Intervall zwischen dem optischen Ausgang (21) des Entfernungsmessers (20) und dem optischen Modul auszugleichen, wenn das optische Modul vor dem optischen Ausgang des Entfernungsmessers befestigt ist.

10. Verfahren nach einem der vorhergehenden Ansprüche, wobei das optische Modul (10) ferner demontierbare Befestigungsmittel umfasst, die geeignet sind, das optische Modul abnehmbar am monostatischen oder quasi-monostatischen Laser-Entfernungsmesser (20) zu befestigen, so dass das befestigte optische Modul für das Primärstrahlungs-Laserbündel (F₁) wirksam ist, das vom optischen Ausgang (21) des Entfernungsmessers emittiert wird.

11. Verfahren nach einem der vorhergehenden Ansprüche, wobei der Laser-Entfernungsmesser (20) und das optische Modul (10), das vor dem optischen Ausgang (21) des Laser-Entfernungsmessers befestigt ist, in einer Entfernungsmessungsanordnung enthalten sind, wobei die Entfernungsmessungsanordnung in eine optische Visieranordnung, eine optische Zeigeanordnung, eine optische Zielmarkierungsanordnung oder einen Kopf mit mehreren Sensoren zur Charakterisierung einer Umgebung integriert ist.

## Claims

1. A method for protecting a monostatic or quasi-monostatic laser rangefinder (20), said rangefinder having an optical outlet (21) for emitting a laser beam (F₁) of primary radiation and an optical inlet (22) for collecting a portion of a return radiation (F_{R}), the optical outlet and inlet being juxtaposed or superimposed, with a center-to-center distance between the emission and reception pupils that is zero or less than or equal to 100 mm, and the rangefinder being designed so that a direction of propagation of the primary radiation emitted by the optical outlet is identical to a direction of propagation of the portion of return radiation collected during a measurement operation of the rangefinder,
the method comprising attaching an optical module in front of the optical outlet (21) of the rangefinder (20), so as to offset transversely the laser beam of primary radiation (F₁),
the optical module (10) being such that a direction of propagation of the primary radiation downstream of the optical module is identical to a direction of propagation of said primary radiation between the optical outlet of the rangefinder and said optical module, with a transverse offset length (L) that is between 10 cm and 35 cm, preferably between 15 cm and 20 cm, measured perpendicularly to the direction of propagation, said optical module comprising two reflector assemblies (1,2) which are arranged on a path of the laser beam of primary radiation emitted by the rangefinder equipped with the optical module, downstream of the optical outlet of the rangefinder, so that the primary radiation is reflected by one and then the other of the two reflector assemblies, each reflector assembly being suitable for applying a deviation to the laser beam of primary radiation, and the respective deviations applied by one and then by the other of the two reflector assemblies being opposite to one another.

2. The method according to claim 1, wherein the optical module (10) is further arranged so as not to offset transversely the portion of the return radiation (F_{R}) that is collected by the rangefinder (20) during the measurement operation of said rangefinder, said return radiation resulting from a backscattering or retroreflection of the primary radiation by a target distant from the rangefinder.

3. The method according to claim 1 or 2, wherein each reflector assembly (1, 2) of the optical module (10) comprises a portion of a material that is transparent to the primary radiation, said portion having three reflecting flat faces (S₀, S₁, S₂) arranged in superposition with areas of three respective faces of a cube, distributed around a vertex of the cube (P₁), so that when the optical module is attached in front of the optical outlet (21) of the rangefinder (20), each reflector assembly reverses the direction of propagation of the primary radiation (F₁) while remaining along the same direction of propagation, but producing an elementary transverse offset of the laser beam of primary radiation, the effective transverse offset for said laser beam of primary radiation between the downstream of the optical module and a gap between the optical outlet of the rangefinder and said optical module, being a vector addition of the elementary transverse offsets produced by the two reflector assemblies.

4. The method according to claim 3, wherein each portion of the transparent material has a bar shape, with a first longitudinal end (L₁₁, L₂₁) of the bar comprising a reflecting flat face (S₀), and with a second longitudinal end (L₁₂, L₂₂) of the bar, opposite to said first longitudinal end, comprising a right-angle reflecting dihedron, with an edge of said dihedron being perpendicular to the reflecting flat face of the first longitudinal end of the bar.

5. The method according to claim 1 or 2, wherein each reflector assembly (1, 2) of the optical module (10) comprises an optical square based on a pentaprism which has two reflecting flat faces (S'₁, S'₂), such that when the optical module is attached in front of the optical outlet (21) of the rangefinder (20), each reflector assembly applies a right-angle deflection to the direction of propagation of the primary radiation (F₁).

6. The method according to claim 1 or 2, wherein each reflector assembly (1, 2) of the optical module (10) is a planar mirror, and the optical module is arranged so that the two planar mirrors are parallel.

7. The method according to claim 6, wherein the optical module (10) comprises a rhombohedron (4) of transparent material, of which two opposite faces are reflecting so as to produce reflections of the primary radiation which are internal to the rhombohedron of transparent material, each of the two reflecting faces of the rhombohedron forming one of the two reflector assemblies (1, 2).

8. The method according to any one of the preceding claims, wherein each reflecting flat face of the reflector assemblies (1, 2) of the optical module (10) has a surface area that is less than 9 cm², preferably less than 4 cm².

9. The method according to any one of the preceding claims, wherein the optical module (10) further comprises at least one Risley prism (3) able to compensate for a lack of identical directions of propagation between the primary radiation (F₁) downstream of the optical module and said primary radiation in the gap between the optical outlet (21) of the rangefinder (20) and said optical module, when the optical module is attached in front of the optical outlet of the rangefinder.

10. The method according to any one of the preceding claims, wherein the optical module (10) further comprises removable attachment means which are suitable for removably attaching the optical module on the monostatic or quasi-monostatic laser rangefinder (20), so that the attached optical module is efficient for the laser beam of primary radiation (F₁) emitted by the optical outlet (21) of the rangefinder.

11. The method according to any one of the preceding claims, wherein the laser rangefinder (20) and the optical module (10) attached in front of the optical outlet (21) of said laser rangefinder, are comprised in a rangefinder assembly, said rangefinder assembly being integrated into an optical sighting assembly, an optical pointing assembly, an optical target designation assembly, or a multi-sensor head intended for characterizing an environment.
